# EUROPEAN PATENT SPECIFICATION

(11) **EP 4 382 727 B1**
(45) Date of publication and mention of the grant of the patent: **14.10.2026**
(21) Application number: 22212582.5
(22) Date of filing: 09.12.2022
(51) Int. Cl.: F01D 5/14, F01D 5/22, F01D 5/28

(54) **A ROTOR FOR A DUCTED FAN ENGINE**
ROTOR FÜR EINEN MANTELGEBLÄSEMOTOR
ROTOR POUR MOTEUR À SOUFFLANTE À CONDUIT

(43) Date of publication of application: 12.06.2024
(73) Proprietor: Archer Aviation Inc., San Jose, CA 95134 (US)
(72) Inventor: Krollmann, Jan, 80798 München (DE); Beehler, Cecil, 80798 München (DE)
(74) Representative: Finnegan Europe LLP

(56) References cited:
- US-A1- 2007 039 310
- US-A1- 2015 369 046
- US-B1- 7 578 655

## Description

The present invention is related to a rotor for a ducted fan engine as well as a method of forming a rotor for a ducted fan engine.

It is known that rotors are used for plane fan engines. Those rotors are usually made out of a metal material to provide endurance and mechanical stability. It is also known to search for lighter materials to reduce the weight of such rotors and thereby reducing the overall weight of the respectively equipped planes. US 2015/369046 A1, US 7 578 655 B1 and US 2007/039310 A1 relate to such applications, for instance.

One possibility of such lightweight materials are so-called composite materials comprising a polymeric matrix material and reinforcing fibres. For use in airplanes usually only one type of such polymeric matrix and fibre combinations is used. In particular, the matrix being a polymeric matrix, has embedded reinforcing fibres which are continuous or so-called endless fibres. The use of such continuous fibres allows a specific orientation of such fibres within the polymeric matrix during the manufacturing process. This leads to a construction, whereas in the polymerized body of each of the rotor blades the direction and orientation of those continuous fibres is well known. Due to the fact that the mechanical stability and the possibility to provide a load path for load applied to such rotor blades is strongly correlated with the orientation of the reinforcing fibres, the knowledge about such orientation is important to calculate stability and construct the rotor blades accordingly. Therefore, in commonly known efforts to provide lightweight rotor blades, such rotor blades are only possible to be produced with such continuous fibres as reinforcing fibres in a matrix material.

One problem of the present situation is that the application of endless or continuous fibres in a matrix material is relatively easy for simple shapes of rotor blades, but for more complex structures, in particular at the root section where those blades are attached to a shaft, the endless fibres represent challenges or the complexity of the production method is increased significantly. Therefore, according to the present knowledge, those composite material rotor blades are used in combination with regular shaft hubs for example made of steel to provide the connection to a drive shaft and to support those rotor blades in taking on the driving load.

One further disadvantage of the present solution is the fact that the rotor blades not only need to provide stability for taking on the driving load, but also to withstand further reaction loads resulting from the air load and centrifugal load while rotating as well as mechanical impacts coming from birds, stones or the like. To provide those additional or secondary mechanical stability the rotor blades are constructed with an increased size and in particular an increased weight.

It is an object of the present invention to solve the above-mentioned problems at least partly. In particular it is an object of the present invention to provide an easy and cost-efficient way to reduce the weight and still keep a high mechanical stability of composite material rotors.

Aforesaid object is achieved by a rotor according to the features of independent claim 1 as well as a method according to independent claim 13. Features mentioned in relation to independent claim 1 can freely be combined with features mentioned in relation to the method claims and vice versa.

According to the present invention a rotor is constructed to be used in a ducted fan engine. Such a rotor comprises a plurality of rotor blades, each having a blade body with a root section to be connected to a drive shaft to receive a primary driving load to provide a primary load path. Additionally, such a blade body comprises a tip section which is positioned at the opposite end of the blade body. The plurality of rotor blades is arranged circumferentially to form the mentioned rotor. Additionally, the rotor comprises a rotationally symmetrical load bearing element which is in force transferring contact with the plurality of blade bodies in a load bearing section. Such a load bearing section is located between the root section and the tip section of all of the blade bodies and therefore the load bearing element can provide a secondary load path for at least a part of the reaction load of the blade bodies. Moreover, the blade bodies of the rotor blades are made of a composite material comprising a polymeric matrix and continuous reinforcing fibres embedded in that polymeric matrix. The load bearing element is also made of a composite material comprising a polymeric matrix, but it further comprises chopped reinforcing fibres embedded in such polymeric matrix.

According to the present invention the rotor is made of composite material and thereby offers the possibility of a lightweight construction and the respective reduction of overall weight when used for an airplane. To provide stability of the rotor blade as a primary functionality element itself, the composite material for those blade bodies comprises the polymeric matrix with the known continuous reinforcing fibres. That means that the blade bodies can be constructed in the commonly known way thereby providing the necessary and well-known mechanical stability to take on the driving load from a rotating shaft.

In contrast to the commonly known technology, the mechanical stability for secondary loads, namely reaction loads applied on the rotor blades, is now shifted from the blade bodies at least partly to a secondary element which is formed as a load bearing element according to the present invention. Such a load bearing element therefore is separate from the connection to the shaft and thereby provides a separate so called secondary load path to take on at least partly those secondary loads like reaction forces coming from the blade bodies. Due to the fact that such load bearing element is in force transferring contact with all of the blade bodies it can take on the reaction load from all of those blade bodies. Moreover, the transfer contact to transfer the forces is located between the tip section and the root section such that a leverage effect is created between the reaction force at the tip of the rotor blade and the respective transfer into the secondary load path in the intermediate load bearing section of the blade body. The same is also in place for any impacts that result in respective reaction forces at the central hub where the shaft is to be connected to the rotor blades.

According to the discussion above, the load bearing section therefore is located in an intermediate part in between and spaced apart from the tip section of the blade bodies as well as from the root section of the blade bodies. For example, the load bearing element can form some kind of a symmetrical ring surrounding the driving shaft and thereby connecting in this circumferential extension all of the blade bodies and thereby the rotor blades. As discussed later the load bearing element can provide further functionality in particular enhance the aerodynamical functionality of the rotor itself.

According to the present invention the main aim is to combine a high mechanical stability with the maximum reduction of weight. To achieve this goal the present invention provides the load bearing element with a composite material such as it is a lightweight material by itself. Due to the fact that the load bearing element now separates the secondary loads from the main driving loads it is possible to construct the composite material of the load bearing element free and in particular not with the commonly known continuous or endless fibres but to use much so called chopped or short fibres.

Since the chopped or short fibres are randomly orientated in the matrix material of the composite material of the load bearing element, the knowledge about the mechanical stability and the orientation of the mechanical resistance is less predictable in comparison to the use of endless or continuous fibres. However, the construction of more complex structures in particular a complex circumferential and rotationally symmetrical structure like the inventive load bearing element is much easier to be produced than with the use of continuous fibres. In an airplane in terms of stability prediction the most critical load is the driving load to be applied from the rotor shaft centrally via a hub to the plurality of the rotor blades. That main load or driving load can still be transferred by the use of the reinforcing stability provided by the continuous fibres in the matrix material of the blade bodies. The additional mechanical stability which is necessary and is provided by the load bearing element is now provided by a cheaper and less complex material using the chopped fibres. Thereby the same lightweight advantages can be applied to the load bearing element, but without the limiting complexity for producing the complex structure full of that load bearing element. In other words, the present invention allows a combination of the lightweight advantage of composite material with different complexities of the different elements of the structure of the rotor. This combination is only possible due to the separation of the primary load handling for the driving load and the secondary load handling for the reaction load isolated at least partly in the load bearing element.

It can be an advantage according to the present invention when the load bearing element and the rotor blades are formed as monolithic construction. While the general combination and force transferring contact can be also provided by a mechanical contact, by a form fit contact or the like, a material bridge of a monolithic construction between the load bearing element and the load bearing section of the blade bodies is of advantage. This can either be achieved by the use of an adhesive vulcanising the materials of both contacting elements, by a welding step or a thermoplastic melting step. The monolithic combination is in particular related to the use of thermoplastics as polymeric matrix material for the blade bodies as well as for the load bearing element. By melting the matrix materials together, a monolithic construction is achieved thereby allowing a bonding between those two elements with an increased mechanical stability and also providing an easier production method that is described in more detail later.

Additionally, it is possible that according to the present invention the polymeric matrix of the blade bodies and the polymeric matrix of the load bearing elements are selected from the same group of material, in particular thermoplastics. As already mentioned above, it is preferred to provide a monolithic construction of the blade bodies and the load bearing element. One preferred way to achieve such a monolithic construction is the use of thermoplastics which can be welded or melted together. In particular by using thermoplastics with a similar or almost an identical melting point, a welding step and thereby a melting of both matrix materials of both elements is possible and further a material connection between the load bearing element and the blade body is achievable. Those thermoplastics can comprise high performance thermoplastics like PEEK and PEKK. According to the invention, however, alternatively to similar or identical melting points, the melting point of the matrix material of the load bearing element is preferably significantly higher than the melting point of the matrix material of the blade bodies. In particular, when a method for production is used that is described later, the second molding step comprises the injection of melted high temperature matrix material from the load bearing element into a mold wherein the already molded blade bodies are already placed. By injecting the matrix material of the load bearing element with a high temperature this material also provides a heat transfer to the already hardened matrix material of the blade bodies in the load bearing section. In other words, the injected high temperature matrix material is now possible to transfer such heat at least partly to the matrix material in the load bearing section, the temperature succeeds the lower melting point of the matrix material of the load bearing section and thereby the material bridge for the monolithic construction can be achieved in an easy and sufficient manner. In particular no separate heat source is needed to remelt the matrix material in the load bearing section.

Additionally, it can be an advantage that the load bearing element of an inventive rotor comprises a primary load bearing part in force transferring contact with the load bearing section on the blade bodies and a secondary load bearing part in force transferring connection with the root section of the blade bodies. While the general concept of the present invention is already achieved by the one single primary load bearing part a separation into two or even more load bearing parts is also possible. In particular it can be an advantage if the central hub at the root section of the blade bodies is also using the inventive combination of monolithic construction between the load bearing element and the blade bodies. All of the load bearing parts comprise the matrix material and the reinforcing chopped fibres. Thereby also the driving load can be at least partly transferred via that secondary load bearing part into the root section of the blade bodies.

It is also an advantage if according the present invention the load bearing element at least partly extends in axial direction beyond the load bearing section of the blade bodies. This allows in particular to encapsule the blade bodies in the load bearing section. Since reaction loads in particular can be separated in centrifugal loads, impact load as well as air loads on the blade bodies at least the air loads and the impact loads would result in reaction loads also in the axial direction. The further extension of the load bearing element beyond the shape of the blade body in that axial direction allows an even better force transfer to take on those reaction loads from the blade body and guide it along the provided secondary load path. The extension is in particular on both sides of the blade bodies namely in front of the blade bodies as well as after the blade bodies following the air stream through the rotor.

Additionally, it can be an advantage if the outer surface of the load bearing element comprises an aerodynamical functional shape. An aerodynamical functional shape has to be understood as a shape with an aerodynamical function. In other words, the outer side of the load bearing element is constructed to provide reduced aerodynamical resistance and/or to provide a guiding functionality or even a covering functionality for the airflow through the rotor. Since the driving shaft of the engine in the duct is usually to be covered from the airflow the load bearing element can provide that covering functionality as a secondary functionality. For example, the outer surface of the load bearing element can provide a cone shape or a curved shape to reduce the air flow resistance and provide the mentioned guiding and/or covering functionality. The functionality can thereby be considered as a passive aerodynamical functionality. Of course, beside the discussed relatively easy aerodynamical functionalities also more complex guiding functionalities like the provision of additional rotor elements or guiding fins is generally possible to be implemented on the outer surface of the load bearing element.

An advantage can further be achieved if the load bearing element of the rotor extends axially beyond the blade bodies, following a rotationally symmetrical curved shape creating a pointed nose. Since the pointed nose could also be provided by a separate element the incorporation into the load bearing element reduces the complexity even further. Due to the fact that for the load bearing element the chopped reinforcement fibres can be used the increased complexity by integrating the cone shaped pointed nose is not of relevance in terms of the complexity of the production method. In other words, the spinner in front of the rotor can be integrated in a monolithic way into the construction of the load bearing element and thereby the overall complexity for manufacturing and mounting can be reduced significantly. Beside reduction of complexity the use of the same lightweight material for the spinner as being part of the load bearing element will optimise the inventive advantage of lightweight construction for the overall rotor.

A further advantage can be achieved if the load bearing element provides a hollow cavity. The hollow cavity is preferably inside of the load bearing element and facing the root section of the blade bodies. Providing the hollow cavity means can be understood as no material or less material is located in that hollow cavity and thereby the overall weight of the rotor can be reduced even more. Additionally, that hollow cavity can be used to shield other mechanical elements, in particular the driving shaft of the engine, from air flow entering that hollow cavity and interacting with those mechanical elements. The construction of a hollow cavity is in particular combined with an outer surface of the load bearing element providing the aerodynamical functional shape as discussed above.

A further advantage can be achieved if the blade bodies extend between the root section and the load bearing section in a linear or substantially linear manner. That extension allows to reduce the complexity of the shape of the blades to that section where the interaction with the airflow exists. Since in preferred embodiments airflow is shielded by the outer surface of the load bearing element to enter the hollow cavity inside or close to the root section no airflow interaction results in that part of the blade bodies between the load bearing section and the root section. Thereby in that part of the blade body the complexity of the structure can be reduced such that the blade body follows on more or less straight or linear extension. Furthermore, the structure of the blade bodies between the load bearing section and the root bearing section can be even further reduced as to mechanical stability since reaction loads resulting from airflow, centrifugal load applied on the tip section of the blade bodies is at least partly transferred to the secondary load part of the load bearing element, such that less mechanical load has to be guided through the part of the blade bodies between the load bearing section and the root section. In other words, the blade body can be reduced as to its weight even further as to this discussed intermediate section of the bodies.

It can be of advantage that according to the present invention the load bearing element surrounds the load bearing section completely or at least substantially completely. In other words, the surrounding form can allow an extension as discussed above in the axial direction beyond the shape of the blade bodies. It allows an easier and better transfer of reaction loads into the secondary load path provided by the load bearing section and additionally covers the aerodynamic function as also discussed above. The substantially completely surrounding and covering of the load bearing section further allows a form fit between the load bearing element and the load bearing section which is discussed below.

It can be an advantage that according to the present invention the load bearing section and the blade bodies comprise a contact surface extending at least partly along an axial direction of the rotor. This allows a form fit as discussed above and thereby in particular increases and optimises the transfer of centrifugal loads from the tip section of the blade bodies as reaction load into the secondary load path provided by the load bearing section. This can be used as form fit functionality only or can be combined with a monolithic construction using a material junction between the matrix material of the load bearing section and the load bearing element.

An additional advantage can be achieved when the load bearing element comprises rounded edges at least at contact sections to the blade bodies. In particular when a method is used including injection molding steps rounded edges can provide additional advantages for that injection molding process. Furthermore, after the production at the rounded edges reduce the stress created during usage of the rotor and thereby can be avoided or at least reduced. A rounded edge according to the present invention comprises an edge radius in particular between one millimetre and ten millimetres.

It is also an advantage according to the present invention if the rotor comprises at least one of the following geometric dimensions:
- Radial extension of the load bearing section compared to the overall radial extension of the blade body between 20% and 50%,
- Radial distance between the load bearing section and the root section of the blade bodies between 20 and 50 millimetre,
- Radial distance between the load bearing section and the tip section of the blade bodies between 100 and 150 millimetre,
- Radial extension of the blade body between 20 and 150 millimetre,
- Number of rotor blades between 3 and 35.

It can further be an advantage that according to the present invention all rotor blades are identical or substantially identical. In particular this reduces complexity and the number of different parts and thereby reduces the costs to produce such a rotor. The identity is in particular relevant to the material as well as the form of the rotor blades.

It is a further object of the present invention to provide a method of forming a rotor with the features according to the present inventive rotor. Such a method comprises the following steps:
- Molding a composite material comprising a polymeric matrix and continuous reinforcing fibres into a cavity forming a rotor blade, having a blade body with a root section to be connected to a drive shaft to receive a primary driving load and a tip section at the opposite end of the blade body,
- Arranging a plurality of such rotor blades into a jig,
- Molding a composite material comprising a polymeric matrix and chopped reinforcing fibres into a cavity forming a load bearing element, wherein such a load bearing element is formed in force transferring contact with a plurality of blade bodies and in a load bearing section located between the root section and the tip section. This provides a secondary load path for at least a part of reaction loads of the blade bodies.

By forming an inventive rotor, the inventive method comes along with the same advantages as discusses in detail with respect to inventive rotor. As can be seen in the inventive method the use of the different fibres for the different parts of the rotor allows cheap and simple injection molding steps to produce the separate elements of the rotor, in particular the rotor blades as well as the load bearing elements. By the use of the different fibre types for the reinforcing fibres between the different elements of the rotor the different needs for the load situations can be addressed in a way that still keeps complexity and weight of the rotor low.

It can be an advantage if for both molding steps an injection molding process is used. In particular this can comprise the use of polymeric matrix materials being selected from a thermoplastic material type. In particular this can be described as so-called overmolding while the injected fluid matrix material of the load bearing element remelts the matrix material of the rotor blades in their load bearing section to create a material junction between those two parts.

According to the present invention during the second molding step if the molding temperature of the polymeric matrix of the load bearing element is set above the melting temperature of the polymeric matrix material of the blade bodies. In other words, no separate heating of the matrix material of the blade bodies is necessary since there is enough heat transferred in the melted matrix material of the load bearing element such that while arriving in a melted form at the load bearing section this transferred heat can be used to remelt the polymeric matrix material of the blade bodies in those load bearing sections.

The present invention is further described in relation to the accompanying drawings. Those drawings show in a schematic way:
- Fig. 1: an embodiment of an inventive rotor,
- Fig. 2: an embodiment of a part of an inventive rotor,
- Fig. 3: a cross section of an embodiment of an inventive rotor,
- Fig. 4: a cross section of a further embodiment of an inventive rotor,
- Fig. 5: a further cross section of a part of an embodiment of an inventive rotor,
- Fig. 6: a further cross section of a part of a further embodiment of an inventive rotor,
- Fig. 7: a first step of an inventive method,
- Fig. 8: a further step of an inventive method,
- Fig. 9: an aerial vehicle with inventive rotors,
- Fig. 10: a further embodiment of an inventive rotor,
- Fig. 11: the inventive rotor of Fig. 10 in a different view,
- Fig. 12: the inventive rotor of Fig. 10 in a different view,
- Fig. 13: the inventive rotor of Fig. 10 in a cross-sectional view,
- Fig. 14: the inventive rotor of Fig. 10 in a different view,
- Fig. 15: the inventive rotor of Fig. 10 in a different view,
- Fig. 16: an embodiment of a rotor blade,
- Fig. 17: the rotor blade of Fig. 16 in a different view.

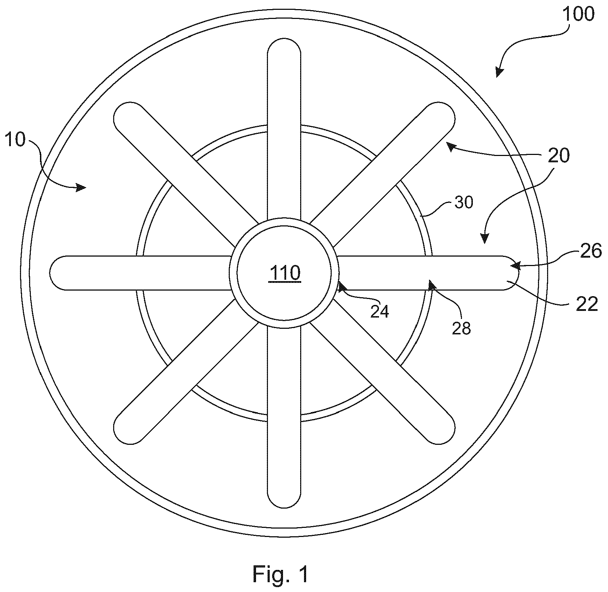

Figure 1 shows along the axial direction AD one example of an inventive rotor 10. This comprises a plurality of rotor blades 20 forming the rotor 10 and thereby creating fan engine 100 in a ducted construction. To provide driving load to the rotor 10 a drive shaft 110 is provided, that is in a driving force contact with a hub, in this case the root sections 24 of all of the rotor blades 20. While operation the drive shaft 110 rotates and thereby transfers the driving load to rotate all of the rotor blades 20.

During operation further load up is applied to the blade bodies 22, for example impact loads, centrifugal loads CL and/or air loads AL as discussed later on. Those secondary loads are now at least partly taken on by the rotationally symmetrical load bearing element 30, which is connected to all of the blade bodies 22 in the load bearing sections 28. In other words, at least a part of the secondary loads is now taken on by the load bearing elements 30 and does not need to be transferred all the way through the root sections 24 of the blade bodies 22.

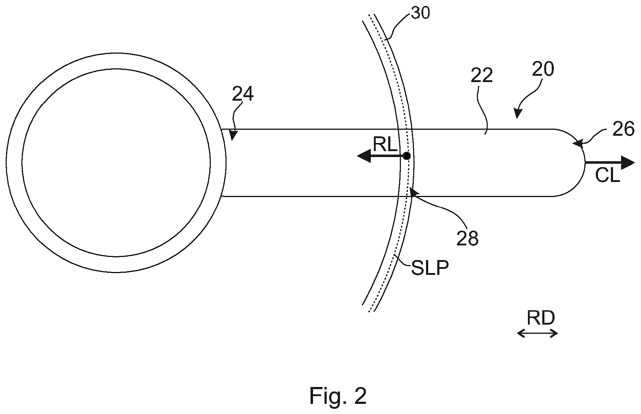

Figure 2 shows a detail of the solution of figure 1 focusing on one of the blade bodies 22. During operation a secondary load in form of a centrifugal load CL is applied at the tip section 26 of the blade body 22 along the radial direction RD. To keep the mechanics stable, a reaction load RL has to be taken on against this centrifugal load CL, which can now be taken on by the load bearing element 30 and be transferred via the load bearing section 28 in the circumferential secondary load path SLP. In other words that reaction load RL is separated from the driving load DL (not depicted in figure 2) and is now taken away from the mechanical stability of the root section 24 of the blade body 22 of the rotor blade 20.

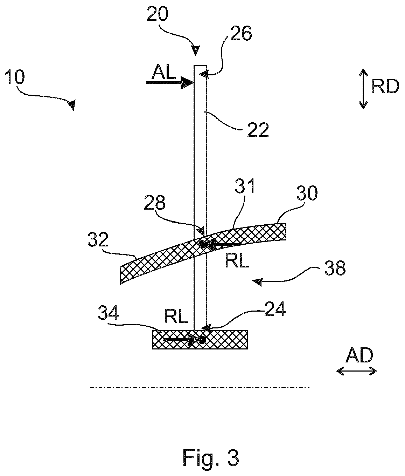

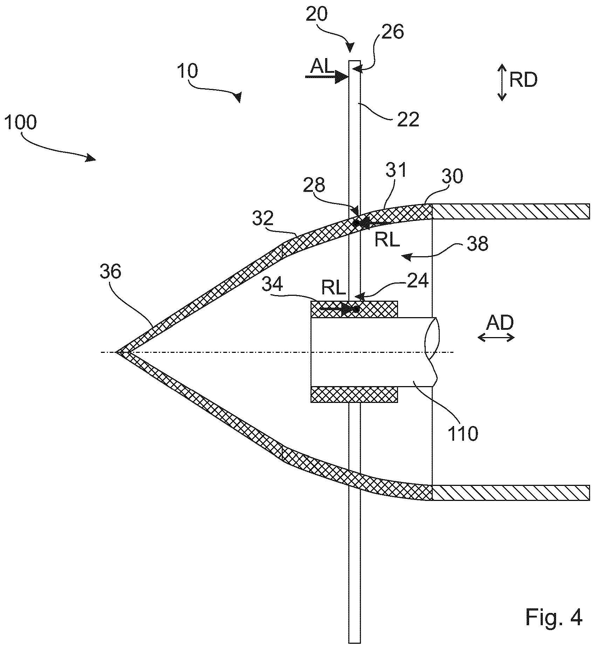

In figure 3 a side cross section is depicted. While rotating round the rotational axis extending along the axial direction AD, each of the rotor blades 20 are now subject to an air load AL resulting from operating an airplane. That air load AL now creates also a reaction load RL with a lever extending between the tip section 26 and the load bearing section 28 as well as a further lever extending to the root section 24. In this embodiment the load bearing element 30 comprises a primary load bearing part 32 and a secondary load bearing part 34 which can be connected or, as depicted in figure 3, separated from each other. Thereby a hollow cavity 38 is created in between the primary load bearing part 32 and the secondary load bearing part 34 reducing the need of material and thus the overall weight of such a rotor 10. Additionally, as can be seen in figure 3, the outer surface 31 of the load bearing element 30 has an aerodynamical functional shape, guiding the air flow and avoiding air entering the hollow cavity 38. This can in particular be seen in correlation with a spinner that can be separate or, as shown in figure 4, integrated in the load bearing element 30.

Figure 4 shows the combination of the embodiment of figure 3 integrated in a fan engine 100 according to figure 1. Now a spinner or a pointed nose 36 is provided as being a monolithic integral part of the load bearing element 30, here the primary load bearing part 32. Also, it can be seen that the drive shaft 110 is in connection with the root sections 24 of all blade bodies 22 or the secondary load bearing part 34 to apply the driving load for rotating the rotor 10.

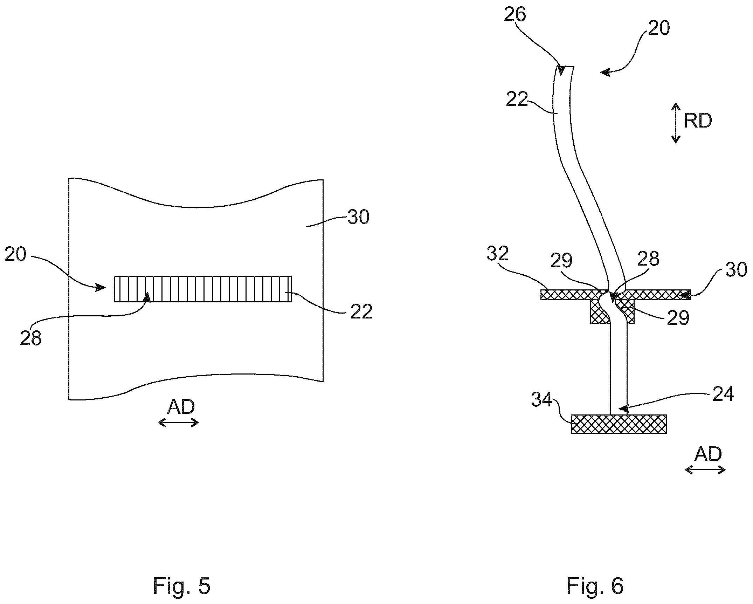

In figure 5 it can be seen that along the axial direction AD depicted the load bearing section extends beyond the edges of the load bearing sections 28 at both ends in axial direction AD. In particular when taking on reaction loads RL resulting from air loads AL, as it can be seen in figure 3 and 4, that additional material can take on those reaction loads RL in a better and more stable way.

Figure 6 shows a further increased complexity in geometrical shape of the load bearing section 28. Since this load bearing section 28 now comprises contact surfaces 29 extending at least partly along the axial direction AD additionally to a potential material junction between the thermoplastic matrix materials a form fit along the radial direction RD can be achieved. This allows the integration and the transfer of centrifugal load CL in an even better way into the reaction load RL of the secondary load path SLP of the load bearing element 30.

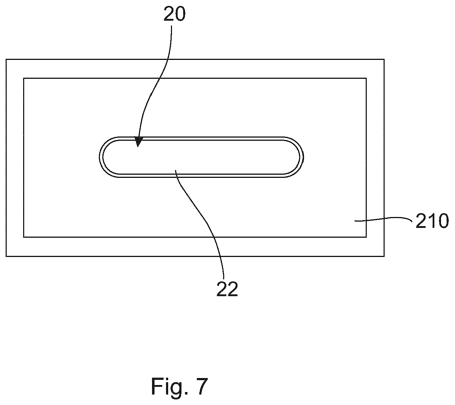

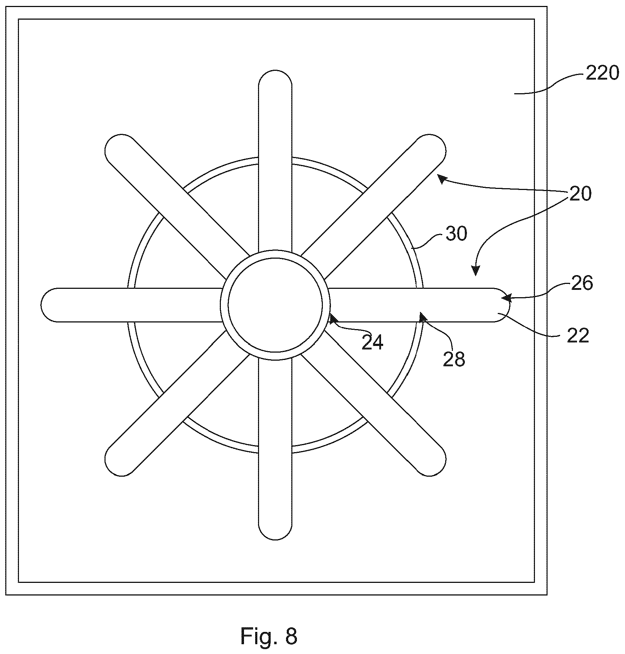

Figures 7 and 8 show a method according to present invention, wherein in figure 7 one single rotor blade 20 is formed in a respective blade mold 210. This is done several times to produce a plurality of identical or substantially identically rotor blades 20 which then can be placed in a jig like a rotor mold 220 according to figure 8. Now via injection molding the melted material for creating the load bearing element 30 is injected and remelts the load bearing sections 28 of all the contacted blade bodies 22. At the end of this injection molding process not only a form fit functionality but also a material junction can be achieved between the load bearing sections 28 of the blade bodies 22 and the material of the load bearing element 30.

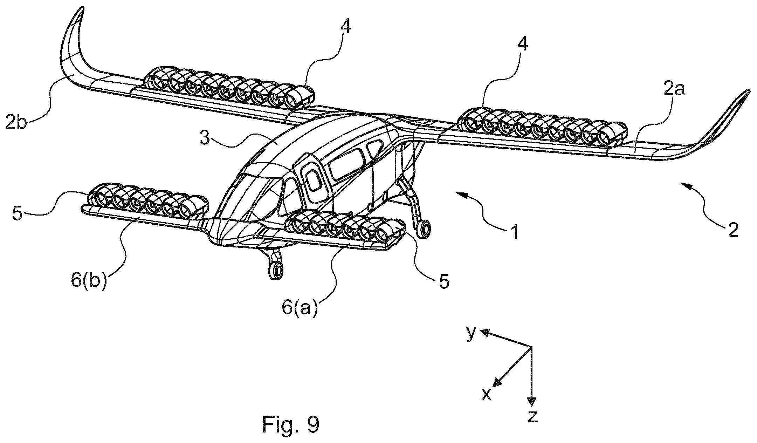

Fig. 9 shows an aerial vehicle which is designated by reference numeral 1. The aerial vehicle 1 comprises an airfoil 2. In particular, the aerial vehicle 1 comprises a left airfoil 2a and a right airfoil 2b extending on both sides of the longitudinal axis of a fuselage 3, respectively along a transversal axis of the aerial vehicle. The transversal axis extends along a wing span of the airfoils 2a and 2b.

On both of the left and right airfoils 2a and 2b, a plurality of propulsion units 4 are attached. The propulsion units 4 are attached to a rear portion, in particular a rear end portion, of the airfoil 2. The plurality of propulsion units 4 are aligned along the transversal axis of the aerial vehicle 1. The propulsion units 4 are attached to be pivotable about the transversal axis. In particular, the propulsion units 4 are pivotable between a substantially horizontal angular position (cruise state) and a substantially vertical angular position (hover state). On the airfoils 2a and 2b, nine propulsion units 4 are provided, respectively.

An actuator is provided for each propulsion unit 4 to set the angular position of the propulsion unit 4 with respect to the airfoil 2.

In addition, the aerial vehicle 1 comprises a canard 6. In particular, a left canard 6a and a right canard 6b are provided to both sides of the longitudinal axis in front of the airfoils 2a and 2b. Front propulsion units 5 are attached to a rear portion, in particular to a rear end portion of the canards 6. The front propulsion units 5 are also attached to the canard 6 to be pivotable around an axis parallel to the transversal axis. On the canards 6a and 6b, six propulsion units 4 are provided, respectively
It is preferable that both of propulsion units 4 and front propulsion units 5 are of a ducted fan type. Also, they may be electrically driven by a rotary electric machine such as an electric motor.

The propulsion units 4 and the front propulsion units 5 comprise a flight control surface, in this case a flap, in order to generate additional lift. In other words, the outer case of the propulsion units 4 comprises a lift generating body.

Each of the propulsion units 4 and the front propulsion units 5 can generate a thrust force by rotation of the fan driven by the electric motor. It is to be noted that each propulsion unit 4 and each front propulsion unit 5 may have a plurality of ducted fans.

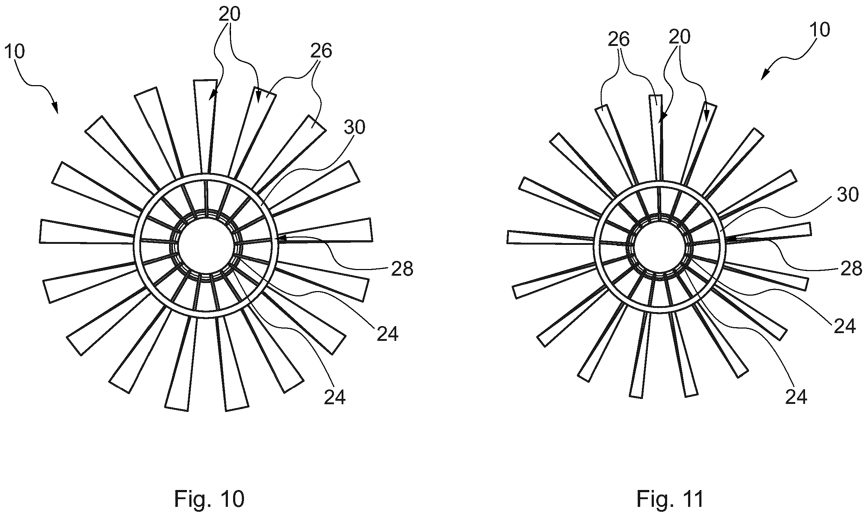

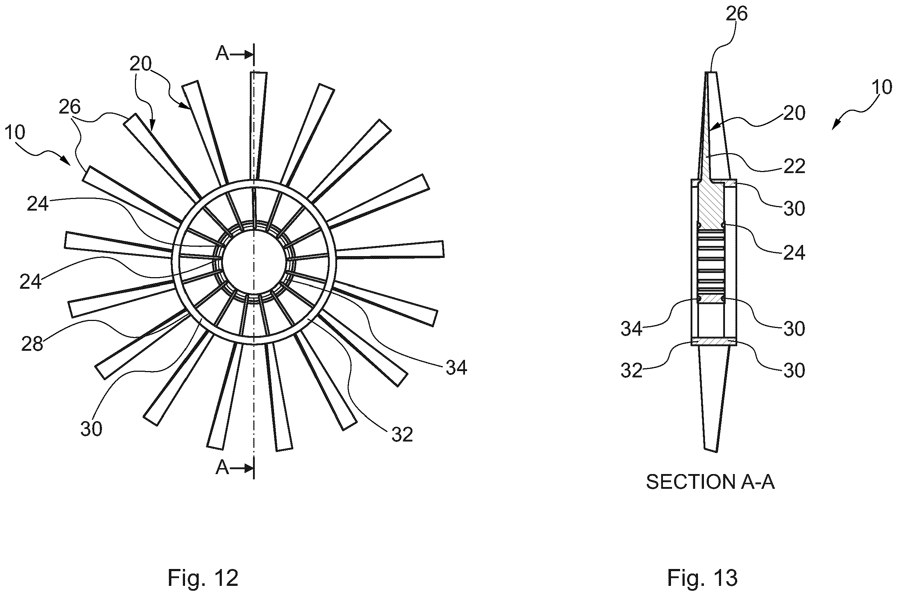

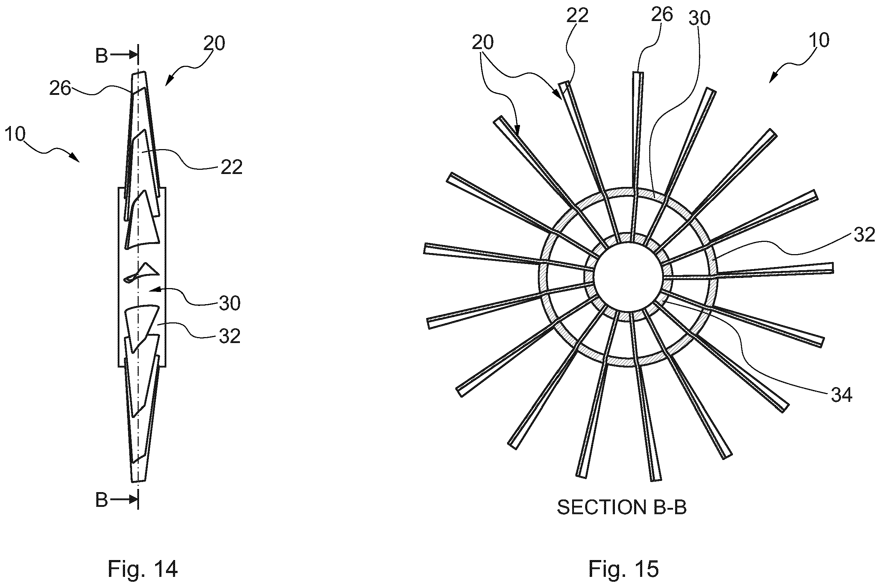

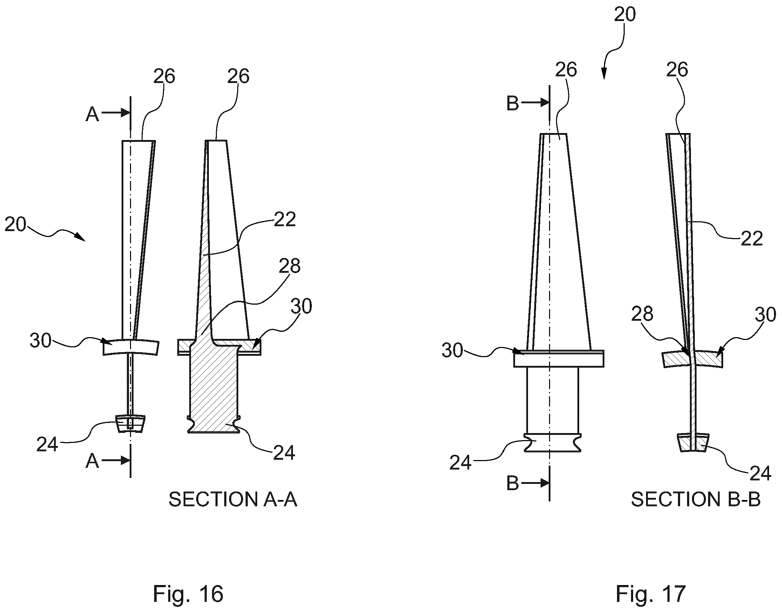

The figures 10 to 17 show a further embodiment of an inventive rotor 10 in different views. In this embodiment, the load bearing element 30 comprises a first load bearing part 32 and a second load bearing part 34. Additionally, in figures 16 and 17 a single blade 20 is depicted. Both figures show the same blade body in different views and with different square sections. As it can be seen in those figures, load bearing element 30 extends in axial direction beyond the edges of the load bearing section 28 of the blade bodies 22. Further, a dove tail connection is part of this embodiment to provide a form fit to a shaft and to transfer the primary load to the rotor body.

The present invention is herewith discussed only by the way of examples not limiting the scope of the present invention.

### Reference signs

- 1: aerial vehicle
- 2: airfoil
- 2a: left airfoil
- 2b: right airfoil
- 3: fuselage
- 4: propulsion units
- 5: propulsion units
- 6a: left canard
- 6b: right canard
- 10: rotor
- 20: rotor blade
- 22: blade body
- 24: root section
- 26: tip section
- 28: load bearing section
- 29: contact surface
- 30: load bearing element
- 31: outer surface
- 32: primary load bearing part
- 34: secondary load bearing part
- 36: pointed nose
- 38: hollow cavity

- 100: fan engine
- 110: drive shaft

- 210: blade mold
- 220: rotor mold

- CL: centrifugal load
- AL: air load
- RL: reaction load
- SLP: secondary load path
- RD: radial direction
- AD: axial direction

## Claims

1. A rotor (10) for a ducted fan engine (100), comprising:
- a plurality of rotor blades (20), each having a blade body (22) with a root section (24) to be connected to a drive shaft (110) to receive a primary driving load to provide a primary load path and a tip section (26) at the opposite end of the blade body (22), being arranged circumferentially to form the rotor (10),
- a rotationally symmetrical load bearing element (30) being in force transferring contact with the plurality of blade bodies (22) in a load bearing section (28) located between the root section (24) and the tip section (26), to provide a secondary load path (SLP) for at least a part of reaction loads (RL) of the blade bodies (22),
- wherein the blade bodies (22) of the rotor blades (20) are made of a composite material, comprising a polymeric matrix and continuous reinforcing fibres embedded in the polymeric matrix,
- wherein the load bearing element (30) is made of a composite material, comprising a polymeric matrix and chopped reinforcing fibres embedded in the polymeric matrix,
**characterized in that**
the melting point of the matrix material of the load bearing element (30) is higher than the melting point of the matrix material of the blade bodies (22).

2. A rotor (10) according to claim 1, **characterised in that** the load bearing element (30) and the rotor blades (20) are formed as monolithic construction.

3. A rotor (10) according to any of the preceding claims, **characterised in that** the polymeric matrix of the blade bodies (22) and the polymeric matrix of the load bearing element (30) are selected from the same group of material, in particular thermoplastics.

4. A rotor (10) according to any of the preceding claims, **characterised in that** the load bearing element (30) comprises a primary load bearing part (32) in force transferring contact with the load bearing section (28) of the blade bodies (22) and a secondary load bearing part (34) in force transferring connection with the root section (24) of the blade bodies (22).

5. A rotor (10) according to any of the preceding claims, **characterised in that** the load bearing element (30) at least partly extends in axial direction (AD) beyond the load bearing section (28) of the blade bodies (22).

6. A rotor (10) according to any of the preceding claims, **characterised in that** the outer surface (31) of the load bearing element (30) comprises an aerodynamical functional shape.

7. A rotor (10) according to claim 6, **characterised in that** the load bearing element (30) extends axially beyond the blade bodies (22), following a rotationally symmetrically curved shape creating a pointed nose (36).

8. A rotor (10) according to any of the preceding claims, **characterised in that** the load bearing element (30) provides a hollow cavity (38).

9. A rotor (10) according to any of the preceding claims, **characterised in that** the blade bodies (22) extent between the root section (24) and the load bearing section (28) in a linear or substantially linear manner.

10. A rotor (10) according to any of the preceding claims, **characterised in that** the load bearing section (28) of the blade bodies (22) comprises a contact surface (29) extending at least partly along an axial direction (AD) of the rotor (100).

11. A rotor (10) according to any of the preceding claims, **characterised in that** the load bearing element (30) comprises rounded edges at least at contact sections to the blade bodies (22).

12. A rotor (10) according to any of the preceding claims, **characterised in that** the rotor (10) comprises at least one of the following geometric dimensions:
- radial extension of the load bearing section (28) compared to the overall radial extension of the blade body (22) between 20 % and 50 %,
- radial distance between the load bearing section (28) and the root section (24) of the blade bodies (22) between 20 mm and 50mm,
- radial distance between the load bearing section (28) and the tip section (26) of the blade bodies (22) between 100mm and 150mm,
- radial extension of the blade body (22) between 20 mm and 1550mm,
- number of rotor blades (20) between 3 and 35.

13. A method of forming a rotor (10) with the features according to any of claims 1 to 12, comprising the following steps:
- molding a composite material comprising a polymeric matrix and continuous reinforcing fibres into a cavity forming a rotor blade (20) having a blade body (22) with a root section (24) to be connected to a drive shaft (110) to receive a primary driving load (DL) and a tip section (26) at the opposite end of the blade body (22),
- arranging a plurality of such rotor blades (20) into a rotor mold (220),
- molding a composite material comprising a polymeric matrix and chopped reinforcing fibres into a cavity forming a load bearing element (30), wherein such load bearing element (30) is formed in force transferring contact with the plurality of blade bodies (22) in a load bearing section (28) located between the root section (24) and the tip section (26), to provide a secondary load path (SLP) for at least a part of reaction loads (RL) of the blade bodies (22).

14. Method according to claim 13, **characterised in that** for both molding steps and injection molding process is used.

15. Method according to any of claims 13 or 14, **characterised in that** during the second molding step the molding temperature of the polymeric matrix of the load bearing element (30) is set above the melting temperature of the polymeric matrix material of the blade bodies (22).

## Patentansprüche

1. Rotor (10) für einen Mantelgebläsemotor (100), umfassend:
- eine Vielzahl von Rotorschaufeln (20), die jeweils einen Schaufelkörper (22) mit einem Fußabschnitt (24) zur Verbindung mit einer Antriebswelle (110) zum Aufnehmen einer primären Antriebslast, um einen primären Lastpfad bereitzustellen, und einen Spitzenabschnitt (26) an dem gegenüberliegenden Ende des Schaufelkörpers (22) aufweisen, die in Umfangsrichtung angeordnet sind, um den Rotor (10) zu bilden,
- ein rotationssymmetrisches tragendes Element (30), das in kraftübertragendem Kontakt mit der Vielzahl von Schaufelkörpern (22) in einem tragenden Abschnitt (28), der sich zwischen dem Fußabschnitt (24) und dem Spitzenabschnitt (26) befindet, um einen sekundären Lastpfad (SLP) für zumindest einen Teil von Reaktionslasten (RL) der Schaufelkörper (22) bereitzustellen,
- wobei die Schaufelkörper (22) der Rotorschaufeln (20) aus einem Verbundmaterial gefertigt sind, umfassend eine Polymermatrix und durchgehende Verstärkungsfasern, die in die Polymermatrix eingebettet sind,
- wobei das tragende Element (30) aus einem Verbundmaterial gefertigt ist, umfassend eine Polymermatrix und zerkleinerte Verstärkungsfasern, die in die Polymermatrix eingebettet sind,
**dadurch gekennzeichnet, dass**
der Schmelzpunkt des Matrixmaterials des tragenden Elements (30) höher ist als der Schmelzpunkt des Matrixmaterials der Schaufelkörper (22).

2. Rotor (10) nach Anspruch 1, **dadurch gekennzeichnet, dass** das tragende Element (30) und die Rotorschaufeln (20) als einteilige Konstruktion gebildet sind.

3. Rotor (10) nach einem der vorstehenden Ansprüche, **dadurch gekennzeichnet, dass** die Polymermatrix der Schaufelkörper (22) und die Polymermatrix des tragenden Elements (30) aus derselben Materialgruppe ausgewählt sind, insbesondere aus Thermoplasten.

4. Rotor (10) nach einem der vorstehenden Ansprüche, **dadurch gekennzeichnet, dass** das tragende Element (30) einen primären tragenden Teil (32) in kraftübertragendem Kontakt mit dem tragenden Abschnitt (28) der Schaufelkörper (22) und einen sekundären tragenden Teil (34) in kraftübertragender Verbindung mit dem Fußabschnitt (24) der Schaufelkörper (22) umfasst.

5. Rotor (10) nach einem der vorstehenden Ansprüche, **dadurch gekennzeichnet, dass** sich das tragende Element (30) zumindest teilweise in axialer Richtung (AD) über den tragenden Abschnitt (28) der Schaufelkörper (22) hinaus erstreckt.

6. Rotor (10) nach einem der vorstehenden Ansprüche, **dadurch gekennzeichnet, dass** die Außenfläche (31) des tragenden Elements (30) eine aerodynamisch funktionelle Form umfasst.

7. Rotor (10) nach Anspruch 6, **dadurch gekennzeichnet, dass** sich das tragende Element (30) axial über die Schaufelkörper (22) hinaus erstreckt und dabei einer rotationssymmetrisch gekrümmten Form folgt, wodurch eine spitze Nase (36) geschaffen wird.

8. Rotor (10) nach einem der vorstehenden Ansprüche, **dadurch gekennzeichnet, dass** das tragende Element (30) einen hohlen Hohlraum (38) bereitstellt.

9. Rotor (10) nach einem der vorstehenden Ansprüche, **dadurch gekennzeichnet, dass** die Schaufelkörper (22) Ausdehnung linear oder auf im Wesentlichen lineare Weise zwischen dem Fußabschnitt (24) und dem tragenden Abschnitt (28).

10. Rotor (10) nach einem der vorstehenden Ansprüche, **dadurch gekennzeichnet, dass** der tragende Abschnitt (28) der Schaufelkörper (22) eine Kontaktfläche (29) umfasst, die sich zumindest teilweise entlang einer axialen Richtung (AD) des Rotors (100) erstreckt.

11. Rotor (10) nach einem der vorstehenden Ansprüche, **dadurch gekennzeichnet, dass** das tragende Element (30) zumindest an Kontaktabschnitten mit den Schaufelkörpern (22) abgerundete Ränder umfasst.

12. Rotor (10) nach einem der vorstehenden Ansprüche, **dadurch gekennzeichnet, dass** der Rotor (10) zumindest eine der folgenden geometrischen Abmessungen umfasst:
- eine radiale Erstreckung des tragenden Abschnitts (28) im Vergleich zu der gesamten radialen Erstreckung des Schaufelkörpers (22) zwischen 20 % und 50 %,
- einen radialen Abstand zwischen dem tragenden Abschnitt (28) und dem Fußabschnitt (24) der Schaufelkörper (22) zwischen 20 mm und 50 mm,
- einen radialen Abstand zwischen dem tragenden Abschnitt (28) und dem Spitzenabschnitt (26) der Schaufelkörper (22) zwischen 100 mm und 150 mm,
- eine radiale Erstreckung des Schaufelkörpers (22) zwischen 20 mm und 1550 mm,
- eine Anzahl an Rotorschaufeln (20) zwischen 3 und 35.

13. Verfahren zum Bilden eines Rotors (10) mit den Merkmalen nach einem der Ansprüche 1 bis 12, umfassend die folgenden Schritte:
- Formen eines Verbundmaterials, umfassend eine Polymermatrix und durchgehende Verstärkungsfasern, in einem Hohlraum, wodurch eine Rotorschaufel (20) gebildet wird, die einen Schaufelkörper (22) mit einem Fußabschnitt (24) zur Verbindung mit einer Antriebswelle (110) zum Aufnehmen einer primären Antriebslast (DL), und einen Spitzenabschnitt (26) an dem gegenüberliegenden Ende des Schaufelkörpers (22) aufweist,
- Anordnen einer Vielzahl solcher Rotorschaufeln (20) in einer Rotorform (220),
- Formen eines Verbundmaterials, umfassend eine Polymermatrix und zerkleinerte Verstärkungsfasern in einem Hohlraum, wodurch ein tragendes Element (30) gebildet wird, wobei ein solches rotationssymmetrisches tragendes Element (30) in kraftübertragendem Kontakt mit der Vielzahl von Schaufelkörpern (22) in einem tragenden Abschnitt (28), der sich zwischen dem Fußabschnitt (24) und dem Spitzenabschnitt (26) befindet, gebildet wird, um einen sekundären Lastpfad (SLP) für zumindest einen Teil von Reaktionslasten (RL) der Schaufelkörper (22) bereitzustellen.

14. Verfahren nach Anspruch 13, **dadurch gekennzeichnet, dass** bei beiden Formschritten ein Spritzgussprozess verwendet wird.

15. Verfahren nach einem der Ansprüche 13 oder 14, **dadurch gekennzeichnet, dass** während des zweiten Formschritts die Formtemperatur der Polymermatrix des tragenden Elements (30) oberhalb der Schmelztemperatur des Polymermatrixmaterials der Schaufelkörper (22) eingestellt wird.

## Revendications

1. Rotor (10) pour moteur à soufflante à conduit (100), comprenant :
- une pluralité d'aubes de rotor (20), chacune présentant un corps d'aube (22) avec une section d'emplanture (24) devant être reliée à un arbre d'entraînement (110) pour recevoir une charge d'entraînement primaire pour fournir un chemin de charge primaire et une section de pointe (26) à l'extrémité opposée du corps d'aube (22), étant agencée circonférentiellement pour former le rotor (10),
- un élément de support de charge (30) à symétrie de rotation étant en contact de transfert de force avec la pluralité de corps d'aube (22) dans une section de support de charge (28) située entre la section d'emplanture (24) et la section de pointe (26), pour fournir un trajet de charge secondaire (SLP) pour au moins une partie de charges de réaction (RL) des corps d'aubes (22),
- dans lequel les corps d'aube (22) des aubes de rotor (20) sont faites d'un matériau composite, comprenant une matrice polymère et des fibres de renforcement continues noyées dans la matrice polymère,
- dans lequel l'élément de support de charge (30) est fait d'un matériau composite, comprenant une matrice polymère et des fibres de renforcement coupées noyées dans la matrice polymère,
**caractérisé en ce que**
le point de fusion du matériau de matrice de l'élément de support de charge (30) est supérieur au point de fusion du matériau de matrice des corps d'aube (22).

2. Rotor (10) selon la revendication 1, **caractérisé en ce que** l'élément de support de charge (30) et les aubes de rotor (20) sont formés en tant que construction d'un seul tenant.

3. Rotor (10) selon l'une quelconque des revendications précédentes, **caractérisé en ce que** la matrice polymère des corps d'aube (22) et la matrice polymère de l'élément de support de charge (30) sont choisies dans le même groupe de matériaux, en particulier les thermoplastiques.

4. Rotor (10) selon l'une quelconque des revendications précédentes, **caractérisé en ce que** l'élément de support de charge (30) comprend une partie de support de charge primaire (32) en contact de transfert de force avec la section de support de charge (28) des corps d'aube (22) et une partie de support de charge secondaire (34) en liaison de transfert de force avec la section d'emplanture (24) des corps d'aube (22).

5. Rotor (10) selon l'une quelconque des revendications précédentes, **caractérisé en ce que** l'élément de support de charge (30) s'étend au moins partiellement dans la direction axiale (AD) au-delà de la section de support de charge (28) des corps d'aube (22).

6. Rotor (10) selon l'une quelconque des revendications précédentes, **caractérisé en ce que** la surface extérieure (31) de l'élément de support de charge (30) comprend une forme fonctionnelle aérodynamique.

7. Rotor (10) selon la revendication 6, **caractérisé en ce que** l'élément de support de charge (30) s'étend axialement au-delà des corps d'aube (22), suivant une forme incurvée à symétrie de rotation créant un nez pointu (36).

8. Rotor (10) selon l'une quelconque des revendications précédentes, **caractérisé en ce que** l'élément de support de charge (30) fournit une cavité creuse (38).

9. Rotor (10) selon l'une quelconque des revendications précédentes, **caractérisé en ce que** les corps d'aube (22) étendue entre la section d'emplanture (24) et la section de support de charge (28) d'une manière linéaire ou sensiblement linéaire.

10. Rotor (10) selon l'une quelconque des revendications précédentes, **caractérisé en ce que** la section de support de charge (28) des corps d'aube (22) comprend une surface de contact (29) s'étendant au moins partiellement le long d'une direction axiale (AD) du rotor (100).

11. Rotor (10) selon l'une quelconque des revendications précédentes, **caractérisé en ce que** l'élément de support de charge (30) comprend des bords arrondis au moins au niveau de sections de contact avec les corps d'aube (22).

12. Rotor (10) selon l'une quelconque des revendications précédentes, **caractérisé en ce que** le rotor (10) comprend au moins l'une des dimensions géométriques suivantes :
- extension radiale de la section de support de charge (28) par rapport à l'extension radiale globale du corps d'aube (22) entre 20 % et 50 %,
- distance radiale entre la section de support de charge (28) et la section d'emplanture (24) des corps d'aube (22) entre 20 mm et 50 mm,
- distance radiale entre la section de support de charge (28) et la section de pointe (26) des corps d'aube (22) entre 100 mm et 150 mm,
- extension radiale du corps d'aube (22) entre 20 mm et 1 550 mm,
- nombre d'aubes de rotor (20) entre 3 et 35.

13. Procédé de formation d'un rotor (10) avec les caractéristiques selon l'une quelconque des revendications 1 à 12, comprenant les étapes suivantes :
- moulage d'un matériau composite comprenant une matrice polymère et des fibres de renforcement continues dans une cavité formant une aube de rotor (20) présentant un corps d'aube (22) avec une section d'emplanture (24) devant être reliée à un arbre d'entraînement (110) pour recevoir une charge d'entraînement primaire (DL) et une section de pointe (26) à l'extrémité opposée du corps d'aube (22),
- agencement d'une pluralité de telles aubes de rotor (20) dans un moule de rotor (220),
- moulage d'un matériau composite comprenant une matrice polymère et des fibres de renforcement coupées dans une cavité formant un élément de support de charge (30), dans lequel un tel élément de support de charge (30) est formé en contact de transfert de force avec la pluralité de corps d'aube (22) dans une section de support de charge (28) située entre la section d'emplanture (24) et la section de pointe (26), pour fournir un trajet de charge secondaire (SLP) pour au moins une partie de charges de réaction (RL) des corps d'aube (22).

14. Procédé selon la revendication 13, **caractérisé en ce qu'**un processus de moulage est utilisé à la fois pour les étapes de moulage et d'injection.

15. Procédé selon l'une quelconque des revendications 13 ou 14, **caractérisé en ce que** pendant la seconde étape de moulage, la température de moulage de la matrice polymère de l'élément de support de charge (30) est fixée au-dessus de la température de fusion du matériau de matrice polymère des corps d'aube (22).
